# EUROPÄISCHE PATENTSCHRIFT

(11) **EP 0 973 953 B1**
(45) Veröffentlichungstag und Bekanntmachung des Hinweises auf die Patenterteilung: **01.12.2004**
(21) Anmeldenummer: 99903527.2
(22) Anmeldetag: 10.02.1999
(51) Int. Cl.: C22B 9/02, C22B 7/04, C22B 19/30, C23C 2/00, C23C 2/06, C23C 2/40, F04D 7/06

(54) **VORRICHTUNG ZUM ABSCHEIDEN VON VERBINDUNGEN AUS ZINKMETALLBÄDERN MITTELS EINES IN DIE ZINKSCHMELZE EINGETAUCHTEN, UM EINE AXE ANTREIBBAREN ROTATIONSHOHLKÖRPERS**
DEVICE FOR PRECIPITATING COMPOUNDS FROM ZINC METAL BATHS BY MEANS OF A HOLLOW ROTARY BODY THAT CAN BE DRIVEN ABOUT AN AXIS AND IS DIPPED INTO THE MOLTEN ZINC
DISPOSITIF POUR LA SEPARATION DE COMPOSES DANS DES BAINS DE ZINC METAL, AU MOYEN D'UN CORPS CREUX ENTRAINE EN ROTATION AUTOUR D'UN AXE ET IMMERGE DANS LE ZINC FONDU

(30) Priorität: 11.02.1998 AT 24798
(43) Veröffentlichungstag der Anmeldung: 26.01.2000
(73) Patentinhaber: Andritz AG, 8045 Graz (AT)
(72) Erfinder: KOS, Bernd, A-8700 Leoben (AT)
(74) Vertreter: Schweinzer, Friedrich
(86) Internationale Anmeldenummer: PCT/AT1999/000034
(87) Internationale Veröffentlichungsnummer: WO 1999/041418

(56) Entgegenhaltungen:
- DE-C- 4 000 935
- PATENT ABSTRACTS OF JAPAN vol. 097, no. 001, 31. Januar 1997 & JP 08 239743 A (KAWASAKI STEEL CORP), 17. September 1996
- PATENT ABSTRACTS OF JAPAN vol. 013, no. 011 (C-558), 11. Januar 1989 & JP 63 219536 A (KUBOTA LTD), 13. September 1988
- PATENT ABSTRACTS OF JAPAN vol. 095, no. 004, 31. Mai 1995 & JP 07 003414 A (KAWASAKI STEEL CORP), 6. Januar 1995
- DATABASE WPI Section Ch, Week 9410 Derwent Publications Ltd., London, GB; Class M24, AN 94-081021 XP002103401 & RU 2 002 832 C (DYAKOV V E) , 15. November 1993

## Beschreibung

Die Erfindung bezieht sich auf eine Vorrichtung zum Abscheiden von festen Verbindungen aus einer Schmelze von flüssigem Zink oder flüssigen Zinkbasislegierungen; insbesondere aus einem dergleichen Metallbad, zum Beispiel Verzinkungsbad.

Zink ist ein Metall mit einem vergleichsweise niedrigen Schmelzpunkt von 419,6 °C und weist ein Standardelektrodenpotential von -0,762 V auf, ist also gegenüber Eisen mit -0,447 V unedler. Weiters ist Zink gegenüber Sauerstoff relativ beständig, weil eine gebildete Zinkoxidschicht auf einer Zinkoberfläche das Zink vor einem Angriff des Sauerstoffes schützt. Ist nun ein Stahlteil mit einer Zinkschicht überzogen, so wirkt das Zink als Anode, schützt also das Eisen vor Oxidation, wobei das gebildete Zinkoxid die Zinkschicht vor weiterer Oxidation bewahrt. Weil nun ein langzeitiger Rostschutz von Eisen und Stahl durch Zink erreichbar ist und Zink einen um mehr als 1100 °C niedrigeren Schmelzpunkt besitzt, ist ein Verzinken von Teilen in einem flüssigen Zinkbad eine der wichtigsten Schutzmaßnahmen gegen atmosphärische und dergleichen Korrosion von Stahlkomponenten.

Ein Verzinken der Stahlteile erfolgt zumeist durch ein Eintauchen in ein Bad mit flüssigem Zink oder einer Zinkbasislegierung zur Bildung des Überzuges. Bleche werden beispielsweise durch ein Zinkbad durchgeführt, wodurch eine dünne, gleichmäßige und fehlerfrei glatte Oberflächenschicht erzielt werden kann.

Eine gute Haftung der Zinkschicht ist dadurch sichergestellt, daß Zink im Alpha (α)-Mischkristall des Eisens bei üblichen Badtemperaturen bis ca. 7,3 At.-% löslich ist. Andererseits ist Eisen in Zink bei dessen Schmelztemperatur nur geringfügig löslich, wobei das Dreiphasengleichgewicht bei 419,5 °C eine eutektische Zusammensetzung : Zink und 0,021 At.-% bzw. 0,018 Gew.-% Eisen aufweist. Bei höherer Temperatur von zum Beispiel 530 °C liegt die Löslichkeit von Eisen im flüssigen Zink bei 0,03 At.-% bzw. 0,25 Gew.-%.

Wird nun in ein Verzinkungsbad Eisen durch am Teil anhaftenden Eisenstaub oder dergleichen sowie durch Anlagenteile eingebracht, so bilden sich Eisen-Zink-Mischkristalle, zum Beispiel FeZn₃, FeZn₇, Fe₃Zn₁₀, Fe₅Zn₂₁. Diese FeZn-Mischkristalle sind gegebenenfalls schwerer als Zink und reichem sich als Hartzink bzw. als sog. "dross" oder "bottom dross" in ruhenden flüssigen Verzinkungsbädem bodenseitig an.
Um die Güte der Verzinkung bzw. Zinkschichtbildung, insbesondere auf Blech, welches mit hoher Geschwindigkeit das Zinkbad durchläuft, zu verbessern ,kann dem Zinkbad in der Größenordnung von 0,1 bis 0,2 Gew.-% Aluminium zulegiert werden. Im gegebenen Fall steht dann der "bottom dross" mit der durch Nachlegieren aluminiumhältiger Zinkschmelze in reaktionskinetischer Wechselwirkung und es entstehen Eisen-Aluminium-Zink-Mischkristalle mit einer Konfiguration Fe₂Al₍₅₋ₓ₎Znₓ und einem spezifischen Gewicht von wesentlich kleiner als 6x10³ kg/m³.

Die Mischkristalle, insbesondere die Verbindungen Fe₂Al₍₅₋ₓ₎Znₓ bilden im Verzinkungsbad eine Trübe, wobei bei Weiterführung der Verzinkungsbehandlungen und weiterem Einbringen von Eisen in das Bad die Partikel größer werden, einen Durchmesser von über 30 µm erreichen und Zusammenballungen, sog. Cluster, entstehen. Diese groben Verbindungspartikel im Verzinkungsbad, gegebenenfalls in Klumpenform, können vornehmlich bei einer Verzinkung von glatten Blechbändern, zum Beispiel für die Automobilindustrie, auf diesen Oberflächenfehler verursachen bzw. die Oberflächengüte der Beschichtung nachteilig beeinflussen.

Zur Reinigung von mit intermetallischen Verbindungen kontaminierten Verzinkungsbädern ist es nötig, diese nach Möglichkeit hinsichtlich der Badströmungen zu beruhigen, wonach die oberflächlich mit den Verbindungen angereicherte Schicht abgeschöpft wird. Es wurde auch schon vorgeschlagen, eine derartige Reinigung in Absetzbecken vorzunehmen.

Die JP-A-63219536 zeigt eine Anlage, bei der von oben Schmelze aufgegeben, diese einer Zentrifugalkraft unterworfen und gereinigtes Zink wiedergewonnen wird. Auch die JP-A-08239743 zeigt eine Vorrichtung zum abscheiden von festen Verbindungen ausflüssigen metall. Die Vorrichtung wird auf die Oberfläche eines Schmelzebades aufgesetzt, wo die Spitze etwas eintaucht, dann solange betrieben, bis der zylindrische Teil mit angereicherter Schmelze gefüllt ist und anschließend wieder abgehoben und ausgeleert.

Die bisher bekannten Reinigungsverfahren haben jedoch die Nachteile einer geringen Effizienz, eines hohen Aufwandes, einer verringerten Wirtschaftlichkeit und Erzeugungssicherheit sowie Produktivität der Anlage gemeinsam.

Der Erfindung liegt die Aufgabe zugrunde, die Mängel der bisherigen Abscheidemethoden zu beseitigen und eine Vorrichtung anzugeben, mittels welcher in Verzinkungsbädem auch bei großen Durchsatzmengen ein unbedeutend niedriger Gehalt an festen Verbindungen eingehalten werden kann, wobei die Erzeugung unbehindert gelassen wird.

Die Aufgabe wird bei einer gattungsgemäßen Einrichtung folgend erreicht, daß in die Schmelze zumindest teilweise ein um die Axe antreibbarer Rotationshohlkörper mit im Eintrags- oder Unterbereich in den Hohlraum ragenden Fördermitteln, zum Beispiel Förder- oder Pumpenflügeln, einbringbar ist, welcher Rotationshohlkörper in Austrags- oder Oberbereich in der Wandung exzentrisch zumindest eine Austragsöffnung für die abgereicherte Schmelze und zentrisch und/oder austragsseitig exzentrisch nachgeordnet, zumindest eine weitere Austragsöffnung für das mit Verbindungen angereicherte Flüssigmetali besitzt, wobei zumindest eine der oberen Schmelzaustragsöffnungen im Rotationshohlkörper in einem Austragsbereich eines diesen zumindest teilweise umgebenden Gehäuse mündet, welcher Gehäusebereich zumindest einen Austragskanal für die angereicherte Schmelze aufweist und einen weiteren für die abgereicherte Schmelze, welcher rückführend in das Metallbad gebildet ist, besitzt.

Die Vorteile einer so erzielten Reinigung eines Verzinkungsbades von intermetallischen Verbindungen sind im wesentlichen darin zu sehen, daß mit einer hohen Beschleunigung des mit Verbindungen ungleicher Dichte kontaminierten Metalls ein hoher Entmischungsgrad erreicht und genutzt werden kann. Eine schnelle und hochwirksame Trennung bzw. Ansammlung von festen Schwebepartikeln, insbesondere Fe₂Al₍₅₋ₓ₎Znₓ im Zentrum einer rotierenden Schmelze, war für den Fachmann überraschend, weil einerseits die Unterschiede im spezifischen Gewicht eher als klein zu bewerten sind, andererseits die geringe Teilchengröße und insbesondere die Phasengrenzspannungen zwischen Verbindung und Flüssigmetall einer Entmischung entgegenwirken. Der weitere erfindungsgemäße Vorteil besteht darin, daß größere intermetallische Partikel und insbesondere Verbindungszusammenballungen, die eine besonders große Güteminderung der Beschichtung bewirken können, wie gefunden wurde, durch eine hohe Beschleunigung hochwirkungsvoll und umfassend konzentriert und ausgetragen werden können.

Die Vorteile einer erfindungsgemäßen Vorrichtung bestehen im wesentlichen darin, daß durch die eintragsseitig in den Hohlraum des Rotationskörpers ragenden Fördermittel ein Durchsatz und eine Druckerhöhung der rotierenden Schmelze in diesem erreichbar sind. Beides, die durchgesetzte Menge und der Druck im Flüssigmetall, sind, wie gefunden wurde, wichtig für die Abscheidungskinetik bzw. das Konzentrationsverhalten der festen Verbindungen im Flüssigmetall bei einer Zentrifugalbeschleunigung. Sowohl die Durchflußmenge durch den Rotationshohlkörper als auch der in diesem aufgebaute Druck sind, durch die Ausbildung der Fördermittel und durch die Größe der Austragsöffnungen synergetisch im Hinblick auf optimale Abscheidungskriterien von intermetallischen Teilchen erstellbar.

Wird nun durch das Abschalten des Antriebs die Vorrichtung außer Betrieb gesetzt und ausgehoben, so läuft der gesamte Innenraum leer, so daß diese zum Wiedereinsatz ohne weitere Reinigungsarbeiten verfügbar ist.

Die durch die Fördermittel induzierte Rotation der kontaminierten Metallschmelze kann wirkungsvoll unterstützt werden, wodurch auch der Rotationshohlkörper in seiner Längserstreckung verkleinerbar ist, wenn die Innenwandung des Rotationshohlkörpers die Drehbewegung der Schmelze in diesem fördernde

Mitnehmer-oder Leitmittel aufweist.

Dabei ist ein getrennter Schmelzenaustrag verbessert, wenn der Rotationshohlkörper mit den Gehäuseteilen kooperierende Schleuderdichtelemente oder dergleichen Dichtelemente besitzt.

Zur Einstellung der insbesondere für unterschiedliche Schmelzentemperaturen wichtigen optimalen Durchflußmengen und des Druckes durch den bzw. im Rotationshohlkörper ist es vorteilhaft wenn die Antriebsdrehzahl der rotierenden Welle des Hohlkörpers einstellbar ist.

Sowohl für ein Senken der Wärmeabfuhr als auch ein Auslaufenlassen der Vorrichtung von Flüssigmetall hat es sich als günstig erwiesen, wenn zumindest Teile das Gehäuses eine Wärmeisolierung tragen.

Im folgenden wird die Erfindung anhand von lediglich jeweils einen Ausführungsweg darstellenden Zeichnungen näher erläutert.

Es zeigt
Fig. 1 eine Abscheidevorrichtung mit konischem Rotationshohlkörper
Fig. 2 eine Abscheidevorrichtung mit zylindrischem Rotationshohlkörper und zwei Schmelzenaustragskanälen

Nachfolgend ersichtlich ist die Bezugszeichenliste der schematischen Darstellungen:
- 1: Schmelze
- 11: mit Verbindungen kontaminierte Schmelze
- 12: angereicherte Schmelze
- 13: Verbindungskonzentrat
- 14: abgereicherte Schmelze

- 2: Rotationshohlkörper
- 21: Fördermittel oder Förderflügel, Pumpenflügel
- 22: Mitnehmer oder Leitmittel
- 23: Austragsöffnung für abgereicherte Schmelze
- 24: Drehdichtmittel
- 25: Austragsöffnung für angereicherte Schmelze
- 26: rotierende Welle

- 3: Gehäuse
- 31: Dichtmittel
- 32: Austragskanal für angereicherte Schmelze
- 33: Austragskanal für abgereicherte Schmelze
- 34: Isolierung

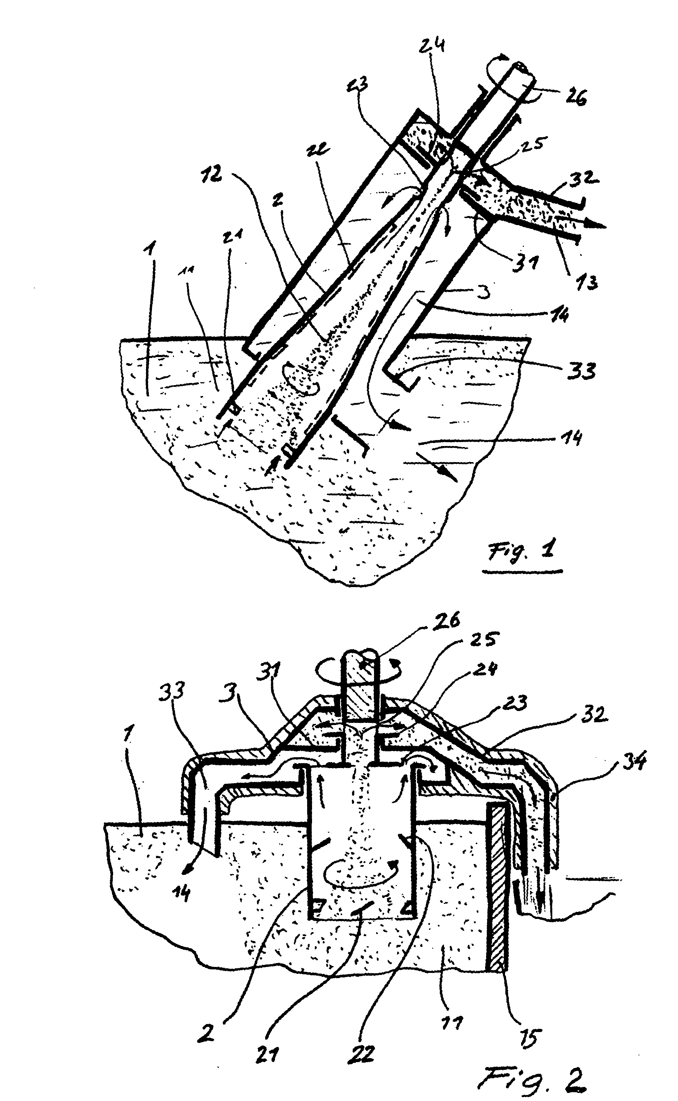

In Fig. 1 ist schematisch ein schräg in ein Verzingkungsbad 1 teilweise eintauchender Rotationshohlkörper 2, welcher von einem Gehäuse 3 teilweise umschlossen ist, dargestellt. Bei einem Antrieb mittels einer rotierenden Welle 26 erfährt der Rotationshohlkörper 1 eine Drehbewegung um dessen Längsaxe, wobei in den Hohlraum ragende Fördermittel 21 mit Verbindungen kontaminierte Schmelze 11 in diesen bis zu dessen Füllung einbringen. Die Fördermittel 21 können als schräg angestellte Förder- oder Pumpenflügel oder dergleichen wirkende Teile ausgeführt sein. Durch eine koaxiale Bewegung der Fördermittel 21 und/oder durch gegebenenfalls vorgesehene Mitnehmer-oder Leitmittel 22 wird weiters die in den Rotationshohlkörper 2 eingebrachte, mit Teilchen kontaminierte Schmelze 11 in Drehung versetzt, so daß in dieser eine Radialbeschleunigung wirksam ist.
Einige Verbindungen, zum Beispiel Oxide oder Oxidhäute und Eisen - Aluminium-Zink- Mischkristalle, weisen beispielsweise eine geringere Dichte als eine flüssige Zinkbasislegierung auf und werden somit infolge der Beschleunigungswirkung in die Axrichtung gedrängt, wodurch im Axbereich des Hohlraumes eine Konzentratrion von festen Partikeln, also eine Anreicherung 12 im Flüssigmetall, entsteht. wohingegen im Bereich der Wandung des Rotationshohlkörpers 2 abgereicherte Schmelze vorliegt. Es erfolgt also durch die Fördermittel 21 und gegebenenfalls Mitnehmer 22 bei Drehung des Hohlkörpers 2 ein stetiges Einbringen bei Induktion einer Drehbewegung von kontaminierter Schmelze 11 in diesen bzw. diesem sowie ein Desintegrieren unter Bildung eines mit Verbindungen angereicherten 12 und eines abgereicherten Schmelzenteiles. Der Hohlkörper 2 weist in seinem oberen Bereich exzentrisch Austragsöffnungen 23 auf, durch welche die an der Hohtkörpefwandung gesammelte abgereicherte Schmelze 14 ausgebracht, im Gehäuse 3 rückgeführt und mittels eines Austrages 33 abgeleitet werden kann. Im Axbereich verbleibt die an Verbindungen angereicherte Schmelze 12 und wird als Folge des Aufbaues eines hydrostatischen Druckes der Fördermittel 21 weiter nach oben gedrängt. Der oberste Teil des Rotationshohlkörpers 2 weist in seiner Wandung weitere Austragsöffnungen 25 auf, durch welche nun die angereicherte Schmelze 12, ein Verbindungskonzentrat 13 bildend, in einen Gehäuseteil mit einem Austragskanal 32 für dieses Konzentrat 13 ausbringbar ist. Die im Gehäuse 3 ausgebildeten Bereiche für angereicherte 12, 13 und abgereicherte 14 Schmelze können durch Dichtmittel 31, welche mit Drehdichtmitteln 24 des Rotationshohlkörpers 2 zusammenwirken, abgedichtet sein. Es ist vorteilhaft, im Hinblick auf höchste Wirksamkeit der Abscheidung von Verbindungen aus Metallschmelze 1 die Drehzahl sowie eine Konizität des Rotationshohlkörpers 2, eine Ausbildung der Fördermittel 21 und die Größe und Form der Querschnitte der Austragsöffnungen 23, 25 synergetisch aufeinander abzustimmen.

In Fig. 2 ist eine weitere Ausführungsform einer erfindungsgemäßen Vorrichtung dargestellt Ein im wesentlichen zylindrischer Rotationshohlkörper 2 ist im oberen Bereich von einem Gehäuse 3 umschlossen, welches Gehäuse 3 eine Isolierung 34 der Außenoberfläche besitzt. Austragsöffnungen 23 im Hohlkörper 2 für abgereicherte Schmelze 14 sind stirnseitig außen angeordnet, stimseitig zentrisch ist hingegen ein Eintragshohl und nachfolgend an der Oberfläche einer teilweise hohlen Antriebswelle 26 die Austragsöffnungen 25 für angereicherte Schmelze positioniert Ein Drehdichtmittel 24 und ein mit dem Gehäuse 3 verbundenes Dichtmittel 31 , welche zusammenwirken, bilden eine Abtrennung von den jeweiligen Austragskanälen für an festen Verbindungen angereicherte 32 und für abgereicherte 14 Metallschmelze.

Alle erfindungsgemäßen Vorrichtungen haben den Vorteil, daß nach Abschalten des Drehantriebes und Ausheben aus dem Verzinkungsbad der Rotationskörper 2 und die Kenäle 32, 33 leerlaufen gelassen werden können und somit keine Reinigungsarbeiten erforderlich sind. Es können jedoch in günstiger Weise Heizeinrichtungen und/oder Kühleinrichtungen für eine Schmelzenbehandlung während einer Verfahrensdurchführung und/oder für eine vollständige Reinigung der Vorrichtung vorgesehen sein.

## Patentansprüche

1. Vorrichtung zum Abscheiden von festen Verbindungen aus einer Schmelze von flüssigem Zink oder von flüssiger Zinkbasislegierungen insbesondere aus einem dergleichen Metallbad, zum Beispiel Verzinkungsbad, **dadurch gekennzeichnet, dass** in die Schmelze (1) zumindest teilweise ein um die Axe antreibbarer Rotationshohlkörper (2) mit im Eintrags- oder Unterbereich in den Hohlraum ragenden Fördermitteln (21), zum Beispiel Förder- oder Pumpenflügeln, eingebracht ist, welcher Rotationshohlkörper (2) im Austrags- oder Oberbereich in der Wandung exzentrisch zumindest eine Austragsöffnung (23) für die abgereicherte Schmelze (14) und zentrisch und/oder austragsseitig exzentrisch nachgeordnet, zumindest eine weitere Austragsöffnung (25) für das mit Verbindungen angereicherte Flüssigmetall besitz, wobei zumindest eine der oberen Schmelzaustragsöffnungen (23, 24) im Rotationskörper (2) in einem Austragsbereich eines diesen zumindest teilweise umgebenden Gehäuse (3) mündet, welcher Gehäusebereich zumindest einen Austragskanal (32) für die angereicherte Schmelze aufweist und einen weiteren (33) für die abgereicherte Schmelze (14), welcher rückführend in das Metallbad gebildet ist, besitzt.

2. Vorrichtung nach Anspruch 1, **dadurch gekennzeichnet, dass** die Innenwandung des Rotationshohlkörpers (2) die Drehbewegung der Schmelze in diesem fördernde Mitnehmer - oder Leitmittel (22) aufweist.

3. Vorrichtung nach Anspruch 1 oder 2, **dadurch gekennzeichnet, dass** der Rotationshohlkörper (2) mit den Gehäuseteilen kooperierende Schleuderdichtelemente (24) oder dergleichen Dichtelemente besitzt.

4. Vorrichtung nach einem der Ansprüche 1 bis 3, **dadurch gekennzeichnet, dass** die Antriebsdrehzahl der rotierenden Welle (26) des Rotationshohlkörpers (2) einstellbar ist.

5. Vorrichtung nach einem der Ansprüche 1 bis 4, **dadurch gekennzeichnet, dass** zumindest Teile des Gehäuses (3) eine Wärmeisolierung (34) tragen.

## Claims

1. Device for separating solid compounds from a melt of liquid zinc or liquid zinc master alloys, especially from a similar metal bath, for instance a galvanizing bath, **characterised by** a rotating hollow body (2) that can be rotated around its axis, is arranged at least partly in the melt (1) with conveying devices (21), for instance conveying or pump blades, reaching into the hollow space in the infeed or lower area, which rotating hollow body (2) has at least one discharge opening (23) arranged eccentrically in the discharge or upper area in the walls for the depleted melt (14) and centrally and/or on the discharge side eccentrically and downstream, at least one further discharge opening (25) for the liquid metal enriched with compounds, with at least one of the upper discharge openings (23, 24) of the rotating hollow body (2) leading into a discharge section of a casing (3) which encompasses the rotating hollow body (2) at least partly, which casing section has at least one discharge channel (32) for the enriched melt and a further channel (33) for the depleted melt (14), which is designed for reflux into the metal bath.

2. Device according to Claim 1, **characterised by** the inner walls of the rotating hollow body (2) having conveying or guiding means (22) which promote the rotational movement of the melt in the hollow body (2).

3. Device according to Claim 1 or 2, **characterised by** the rotating hollow body (2) having centrifugal sealing elements (24) or similar sealing elements cooperating with the parts of the casing.

4. Device according to one of the Claims 1 to 3, **characterised by** the drive speed of the rotating shaft (26) of the rotating hollow body (2) being adjustable.

5. Device according to one of the Claims 1 to 4, **characterised by** at least some parts of the casing (3) carrying a heat insulation (34).

## Revendications

1. Dispositif de séparation des combinaisons solides à partir d'une fonte de zinc liquide ou d'alliages de base de zinc liquide, surtout d'un bain métallique pareil, par exemple, un bain de galvanisation, **caractérisé en ce qu'**un corps creux rotatif (2) qui peut être tourné autour de son arbre est disposé au moins partiellement dans la fonte (1), avec des dispositifs de convoyage (21), par exemple, des ailes de convoyage ou des ailes de pompe, s'étendant dans l'espace creux de l'aire d'alimentation ou inférieure, ledit corps creux rotatif (2) ayant au moins une ouverture de décharge (23) pour la fonte appauvrie (14), disposée excentriquement à l'aire de décharge ou aire supérieure des parois, et centriquement et/ou excentriquement au côté de décharge et placée en aval, au moins une autre ouverture de décharge (25) pour le métal liquide enrichi de combinaisons, avec au moins l'une des ouvertures de décharge supérieures (23, 24) du corps creux rotatif (2) menant à une section de décharge d'un bâti (3) qui entoure le corps creux rotatif (2) au moins partiellement, ladite section du bâti ayant au moins un canal de décharge (32) pour la fonte enrichie et un autre canal (33) pour la fonte appauvrie (14), étudiée pour le reflux vers le bain métallique.

2. Dispositif selon la revendication 1, **caractérisé en ce que** les parois internes du corps creux rotatif (2) ont des entraîneurs ou dispositifs de guidage (22) qui favorisent le mouvement rotatif de la fonte dans le corps creux rotatif (2).

3. Dispositif selon la revendication 1 ou 2, **caractérisé en ce que** le corps creux rotatif (2) a des éléments d'obturation centrifuges (24) ou des éléments similaires coopérant avec les parties du bâti.

4. Dispositif selon l'une des revendications 1 à 3, **caractérisé en ce que** la vitesse de l'arbre d'entraînement rotatif (26) du corps creux rotatif (2) est ajustable.

5. Dispositif selon l'une des revendications 1 à 4, **caractérisé en ce qu'**au moins quelques parties du bâti (3) portent un calorifugeage (34).
